# EUROPEAN PATENT SPECIFICATION

(11) **EP 4 582 700 B1**
(45) Date of publication and mention of the grant of the patent: **28.10.2026**
(21) Application number: 23860064.7
(22) Date of filing: 17.08.2023
(51) Int. Cl.: F15B 15/10, B25J 9/14, B25J 13/08, G01L 5/00, G01L 5/22

(54) **ACTUATOR GRIPPING FORCE ESTIMATION DEVICE AND ACTUATOR GRIPPING FORCE ESTIMATION METHOD**
VORRICHTUNG ZUR SCHÄTZUNG DER AKTUATORGREIFKRAFT UND VERFAHREN ZUR SCHÄTZUNG DER AKTUATORGREIFKRAFT
DISPOSITIF D'ESTIMATION DE FORCE DE PRÉHENSION D'ACTIONNEUR ET PROCÉDÉ D'ESTIMATION DE FORCE DE PRÉHENSION D'ACTIONNEUR

(30) Priority: 02.09.2022 JP 2022140033
(43) Date of publication of application: 09.07.2025
(73) Proprietor: BRIDGESTONE CORPORATION, Chuo-ku Tokyo 104-8340 (JP); The University of Tokyo, Bunkyo-ku, Tokyo 113-8654 (JP)
(72) Inventor: OONO, Shingo, Tokyo 104-8340 (JP); MIYAZAKI, Tetsuro, Tokyo 113-8654 (JP); KAWASHIMA, Kenji, Tokyo 113-8654 (JP); KUTSUNA, Kaito, Tokyo 113-8654 (JP)
(74) Representative: Marks & Clerk LLP
(86) International application number: PCT/JP2023/029707
(87) International publication number: WO 2024/048300

(56) References cited:
- EP-A1- 1 683 973
- WO-A1-01/72479
- JP-A- 2021 088 999
- US-A1- 2002 157 388

## Description

### Technical Field

The present invention relates to an actuator gripping force estimation apparatus and a method for estimating an actuator gripping force for a fluid pressure actuator.

### Background Art

Conventionally, as fluid pressure actuators, McKibben types of fluid pressure actuators including a rubber tube and a sleeve (obtained by interweaving high-tension fibers) that covers an outer surface of the rubber tube are known. Such McKibben types of fluid pressure actuators can change a length parallel to an axial direction of the rubber tube and the sleeve.

A technology is proposed in which a restraint member is provided in a part of the rubber tube in a circumferential direction thereof from one end side to the other end side of the rubber tube in the axial direction, so that a side of the fluid pressure actuator on which the restraint member is not provided is shortened and curved and deformed (see Japanese Patent Application Laid-open (JP-A) No. 2021-88999).

### SUMMARY OF INVENTION

### Technical Problem

JP-A No. 2021-88999 proposes that a plurality of such fluid pressure actuators be combined and used as fingers that grip an object through curved deformation. In this case, it is necessary to obtain a force for gripping an object with the fluid pressure actuators. US 2002/157388 A1 describes a pump-integrated flexible actuator which comprises a movable unit provided with a plurality of fluid chambers. The plurality of fluid chambers are each provided with a pressure sensor, and a pump driver computes an actual operational force of the movable unit according to determination by the pressure sensors and controls driving of the pump unit.

In view of the fact described above, an object of the present disclosure is to provide an actuator gripping force estimation apparatus and a method for estimating an actuator gripping force which enable a force acting in a direction orthogonal to a tube axis in a fluid pressure actuator to be easily estimated.

### Solution to Problem

In order to achieve the above-described object, there is provided an actuator gripping force estimation apparatus of a first aspect that estimates, as a gripping force of a fluid pressure actuator, a force acting in a direction orthogonal to a tube axis of the fluid pressure actuator when the tube axis is not curved due to curvature, in which the fluid pressure actuator includes a tubular main body portion having a tube circumference of which one side is shortened in a tube axis direction and curved due to an increase in internal pressure in a tube, a proximal end side along the tube axis which is fixed to a base body, and a distal end which moves relative to the base body, the actuator gripping force estimation apparatus including: a pressure sensor that acquires a tube internal pressure of the main body portion; a length acquisition unit that acquires a length from one end portion to another end portion of a side surface of the main body portion which has a largest shortened amount; and a gripping force estimation unit that estimates the gripping force using Equation F = ω₁P(L-Lₘᵢₙ) + ω₂, wherein L represents the length obtained by the length acquisition unit, P represents the internal pressure in the tube obtained by the pressure sensor, F represents the gripping force, ω₁ and ω₂ represent parameters set based on basic characteristics of the fluid pressure actuator, and Lₘᵢₙ represents a constant based on geometric properties of the fluid pressure actuator.

In the actuator gripping force estimation apparatus of the first aspect, the gripping force of the fluid pressure actuator is estimated by the above-provided equation. Consequently, the gripping force can be easily estimated using the internal pressure in the tube and the length from the one end portion to the other end portion of the most contracted side surface of the main body portion.

According to the actuator gripping force estimation apparatus of a second aspect, the length acquisition unit includes a wire member having one end side attached to the base body and a middle portion which is disposed at a curved side of the main body portion and conforms to the curved deformation, a wire holding member that holds the wire member at a position along the main body portion, and a measurement unit that applies tension to the wire member and measures a length change amount of the wire member.

In the actuator gripping force estimation apparatus of the second aspect, the middle portion of the wire member is disposed at the curved side of the main body portion of the fluid pressure actuator and conforms to the curved deformation. The measurement unit applies tension to the wire member and measures the length change amount of the wire member, thereby enabling the length of the fluid pressure actuator on a curved inner side to be easily acquired even in a curved state.

There is provided a method for estimating an actuator gripping force of a third aspect for estimating, as a gripping force of a fluid pressure actuator, a force acting in a direction orthogonal to a tube axis of the fluid pressure actuator when the tube axis is not curved due to curvature, in which the fluid pressure actuator includes a tubular main body portion having a tube circumference of which one side is shortened in a tube axis direction and curved due to an increase in internal pressure in a tube, a proximal end side along the tube axis which is fixed to a base body, and a distal end which moves relative to the base body, the method including estimating the gripping force using Equation F = ω₁P(L-Lₘᵢₙ) + ω₂, wherein L represents a length from one end portion to another end portion of a side surface of the main body portion which has the largest shortened amount, P represents the internal pressure in the tube, F represents the gripping force, ω₁ and ω₂ represent parameters set based on basic characteristics of the fluid pressure actuator, and Lₘᵢₙ represents a constant based on geometric characteristics of the fluid pressure actuator.

In the method for estimating an actuator gripping force of the third aspect, the gripping force of the fluid pressure actuator is estimated by the above-provided equation. Consequently, the gripping force can be easily estimated using the internal pressure in the tube and the length from the one end portion to the other end portion of the most contracted side surface of the main body portion.

According to the method for estimating an actuator gripping force of the fourth aspect, the length from one end portion to the other end portion of the most contracted side surface of the main body portion is obtained by holding a wire member at a position along the main body portion, the wire member having one end side attached to the base body and a middle portion disposed along a curved side of the main body portion and the tube axis direction, applying tension to the wire member, and measuring a length change amount of the wire member.

In the method for estimating an actuator gripping force of the fourth aspect, since the middle portion of the wire member is disposed on the curved side of the main body portion of the fluid pressure actuator and conforms to the curved deformation, the length of the fluid pressure actuator on a curved inner side can be easily acquired even in a curved state by measuring the length change amount of the wire member.

### Advantageous Effects of Invention

According to the disclosure, it is possible to easily estimate a force acting in a direction orthogonal to a tube axis in the fluid pressure actuator.

### BRIEF DESCRIPTION OF DRAWINGS

Fig. 1 is a side view of a fluid pressure actuator as a measurement target of an actuator gripping force estimation apparatus according to the present embodiment.
Fig. 2 is a partially exploded perspective view of a fluid pressure actuator.
Fig. 3 is a cross-sectional view of the fluid pressure actuator.
Fig. 4 is a diagram illustrating a state (non-curved state) in which the fluid pressure actuator is attached to the actuator gripping force estimation apparatus.
Fig. 5 is a diagram illustrating a state (curved state) in which the fluid pressure actuator is attached to the actuator gripping force estimation apparatus.
Fig. 6A is a graph illustrating an estimated gripping force and a measured gripping force in time series as test results, and indicates a case where a length L1 at a target pressure of 200 kPa is 0.074 m.
Fig. 6B is a graph illustrating an estimated gripping force and a measured gripping force in time series as test results, and indicates a case where the length L1 at the target pressure of 200 kPa is 0.072 m.

### DESCRIPTION OF EMBODIMENTS

Hereinafter, embodiments that realize a technology of the disclosure will be described in detail with reference to the drawings.

Configurational elements and processes having the same effects and functions are denoted by the same reference numerals throughout the drawings, and redundant descriptions thereof may be omitted as appropriate. The disclosure is not limited to the following embodiments and can be implemented with appropriate modifications within the scope of the object of the disclosure.

### <Configurations of Fluid Pressure Actuator>

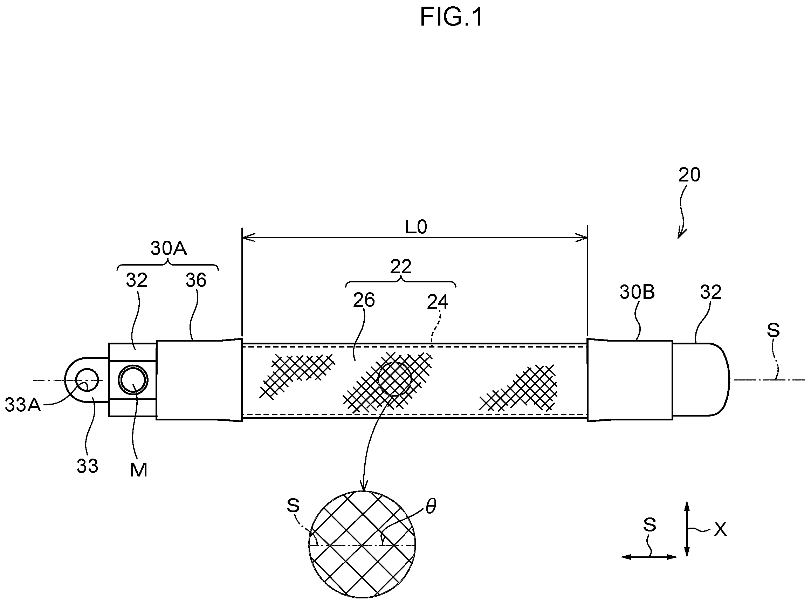

Fig. 1 illustrates a fluid pressure actuator 20 as a measurement target of an actuator gripping force estimation apparatus 10 of the disclosure. The fluid pressure actuator 20 includes an actuator main body portion 22 and sealing members 30A and 30B.

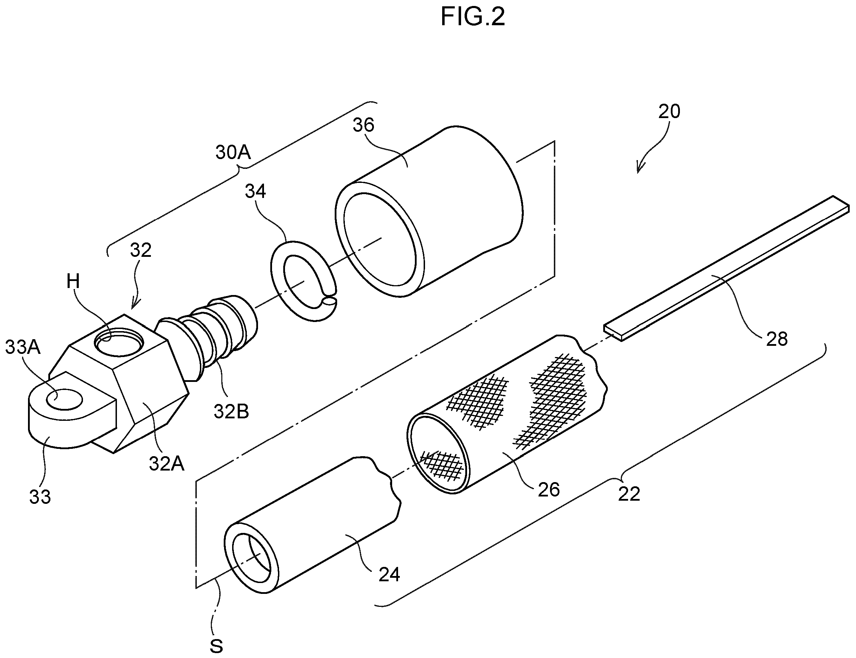

As also illustrated in Fig. 2, the actuator main body portion 22 includes a tube 24, a sleeve 26, and a restraint member 28. The tube 24 has an expandable cylindrical shape due to elastic deformation and expands and contracts due to a pressure change of an internal fluid. An axial direction of the tube 24 is referred to as an "axial direction S". The tube 24 can be made of an elastic material such as butyl rubber. Air can be used as a fluid to be supplied to the tube 24, and in this case, the fluid pressure actuator 20 is a pneumatic actuator. In a case where the fluid pressure actuator 20 is hydraulically driven, it is preferable that the tube be made of at least one selected from the group consisting of nitrile rubber (NBR) having high oil resistance, hydrogenated NBR, chloroprene rubber, and epichlorohydrin rubber.

The sleeve 26 has a cylindrical shape that covers an outer circumference of the tube 24. The sleeve 26 is an elastic structure in which fiber cords oriented in a predetermined direction are interwoven, and the oriented cords intersect the axial direction S at a predetermined angle θ. The sleeve 26 has such a shape, thereby being deformed like a pantograph that changes the angle θ and conforming to contraction and expansion of the tube 24 while restricting the contraction and the expansion of the tube 24.

As the cords constituting the sleeve 26, preferably aromatic polyamide (aramid fiber) fiber cords or polyethylene terephthalate (PET) fiber cords are used. However, the fiber cords are not limited to such types of fiber cords, and may be other high-strength fiber cords such as polyparaphenylene benzobisoxazole (PBO) fibers.

The restraint member 28 is provided between the tube 24 and the sleeve 26. The restraint member 28 has an elongated plate shape, is disposed in a direction in which a longitudinal direction thereof is parallel to the axial direction of the tube 24, covers a part of the outer circumference of the tube 24, and is disposed from one end to the other end of the tube 24.

The restraint member 28 is made of a material that does not expand/contract by pressurization and is bendable and deformable in a direction in which end portions thereof approach each other. As the restraint member 28, a so-called leaf spring can be used. A dimension of the leaf spring is determined depending on a size of the fluid pressure actuator 20, a required gripping force, or the like. The material of the leaf spring is not particularly limited, and generally, any compression-resistant material that is easily bent and deformed, such as metal such as stainless steel, may be used. Alternatively, the leaf spring may be made of a thin carbon fiber reinforced plastic (CFRP) plate or the like.

The sealing member 30A includes a sealing connector 32, a locking ring 34, and a caulking member 36.

The sealing connector 32 has a lid portion 32A and an insertion portion 32B which are integrally molded. The lid portion 32A has a hexagonal column shape with a diameter larger than an outer diameter of the tube 24, and the insertion portion 32B is formed to extend in the axial direction S from a center of the lid portion 32A on one end side. The insertion portion 32B has a so-called bamboo shoot shape and is inserted into one end side of the tube 24 inside the sleeve 26. An attachment portion 33 is formed on a side of the lid portion 32A opposite to the insertion portion 32B. The attachment portion 33 has an attachment hole 33A penetrating the attachment portion 33 in a direction orthogonal to the axial direction S. The sealing member 30A can be suitably made of a metal such as stainless steel, but the material thereof is not limited to such a metal, and a rigid plastic material or the like may be used.

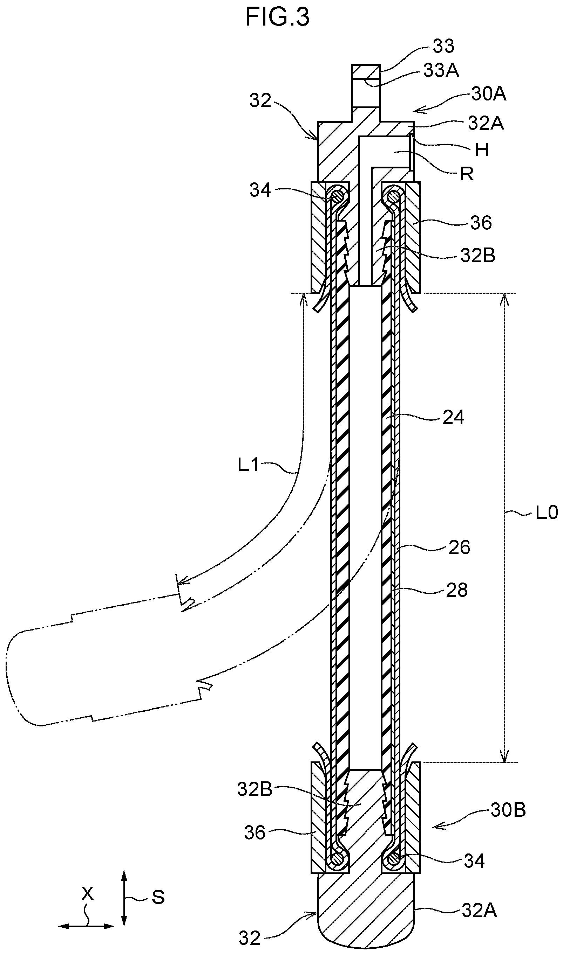

As illustrated in Fig. 3, the sealing connector 32 has a flow channel R. The flow channel R is formed to extend in the axial direction at a radial central portion of the insertion portion 32B and communicates with a connection hole H in a side surface of the lid portion 32A. An air supply hose 50 is connected to the connection hole H, and compressed air is supplied to the connection hole H. The air supply hose 50 is provided with a servo-valve 54 that controls a supply air pressure to a desired value.

The locking ring 34 has a ring shape, is disposed on an outer side of the sleeve 26 so that the sleeve 26 is sandwiched between the locking ring and the insertion portion 32B, and locks the sleeve 26 to the sealing connector 32. The sleeve 26 is folded back to an outer circumference via the locking ring 34. The locking ring 34 can be made of a material such as a metal, a rigid plastic, a fiber, or rubber.

The caulking member 36 is disposed to cover a portion into which the insertion portion 32B is inserted in an outer circumference of the actuator main body portion 22, and the caulking member performs caulking between the actuator main body portion 22 and the sealing connector 32. Consequently, the actuator main body portion 22 is fixed to the sealing connector 32. The caulking member 36 can be made of a metal such as an aluminum alloy, brass, or iron.

Similarly to the sealing member 30A, the sealing member 30B includes a sealing connector 32, a locking ring 34, and a caulking member 36. However, in the sealing connector 32, the connection hole H and the flow channel R are not formed, and a distal end thereof has an R shape.

### <Operations of Fluid Pressure Actuator>

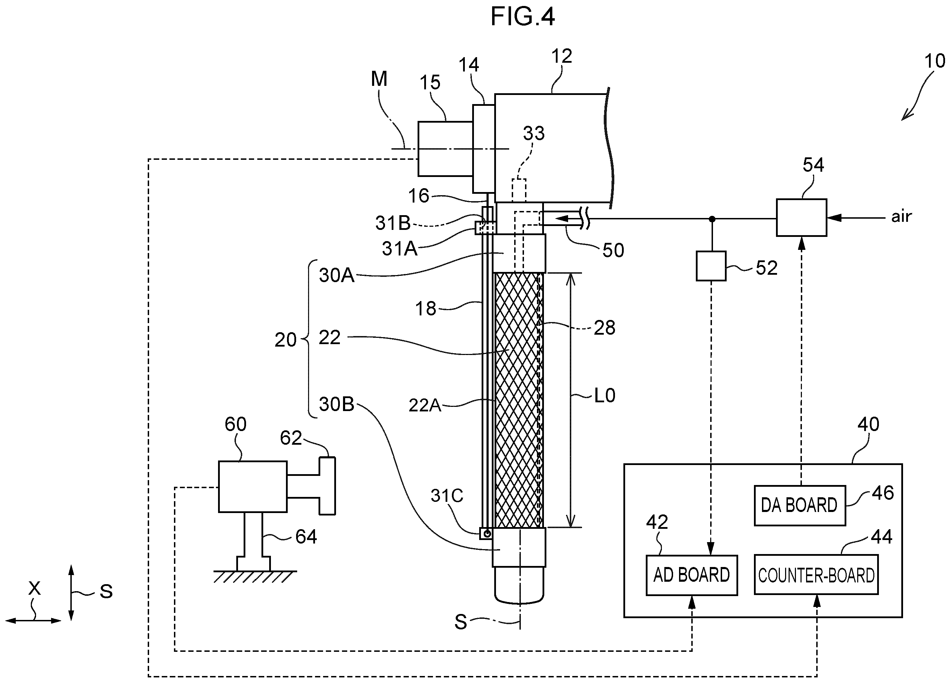

As illustrated in Fig. 4, the fluid pressure actuator 20 is used such that the sealing member 30A on one end side is fixed and the sealing member 30B on the other end side is a free end.

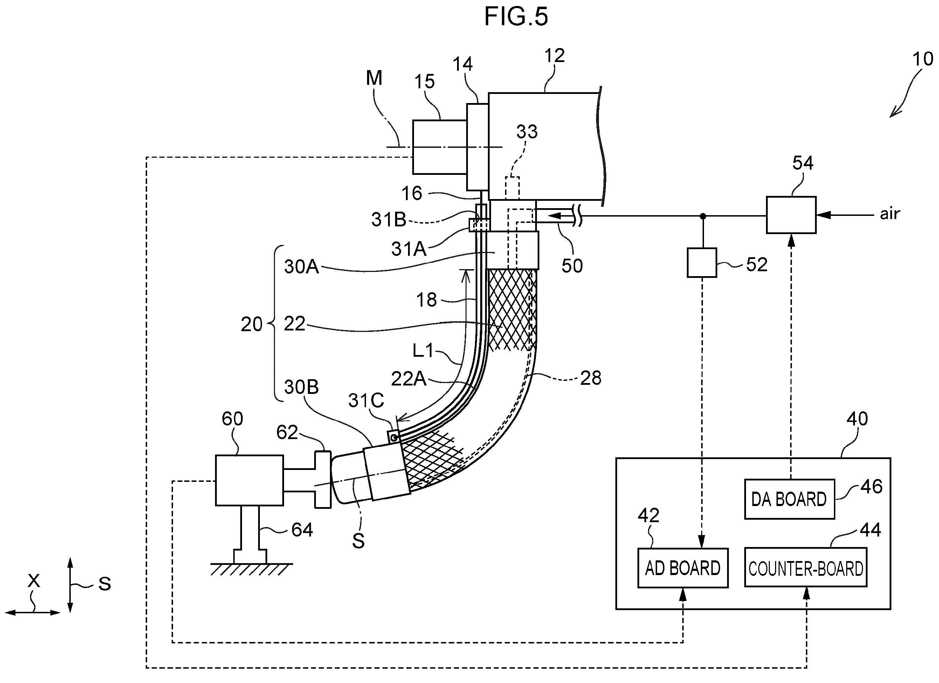

When compressed air flows in from the connection hole H through the air supply hose 50, a pressure in the fluid pressure actuator 20 increases. Due to the increase in the internal pressure, the tube 24 is elastically deformed and expanded, the sleeve 26 is deformed so that the angle θ increases, and a force acts in a direction in which a length L0 (a length when the actuator main body portion is not shortened) of the actuator main body portion 22 is shortened. At this time, since an outer circumferential side wall of the actuator main body portion 22 on which the restraint member 28 is disposed is restricted from being shortened, an outer circumferential wall (hereinafter referred to as a "curved inner wall 22A") of the actuator main body portion 22 on a side on which the restraint member 28 is not disposed is shortened as viewed in the axial direction S. Consequently, the restraint member 28 is bent and deformed, and the entire actuator main body portion 22 is curved as illustrated in Fig. 5. A length from one end portion to the other end of the curved inner wall 22A on a side with the largest shortening amount is represented by L1.

As described above, when the actuator main body portion 22 is curved, a force applied by the sealing member 30B in a direction (hereinafter referred to as an "orthogonal-to-axis direction X") orthogonal to the axial direction S is defined as a gripping force F.

### <Actuator Gripping Force Estimation Apparatus>

As illustrated in Fig. 4, the actuator gripping force estimation apparatus 10 includes a base body 12, a wire winding portion 14, a measurement unit 15, a wire member 16, a wire holding member 18, a pressure sensor 52, and a controller 40.

The base body 12 is a portion that fixes one end of the fluid pressure actuator 20, and the sealing member 30A of the fluid pressure actuator 20 is fixed to a lower surface of the base body via the attachment portion 33. The air supply hose 50 is connected to the connection hole H of the sealing member 30A.

The pressure sensor 52 detects a pressure on a side downstream of the servo-valve 54 of the air supply hose 50 and outputs the detected pressure to an AD board 42, which will be described below, of the controller 40. The internal pressure of the actuator main body portion 22 is detected by the pressure sensor 52.

The wire winding portion 14 is provided in a support portion 12C and is rotatable around a winding axis M. The wire winding portion 14 applies a biasing force to wind the other end side of the wire member 16 so that the wire member 16 is not loosened. The biasing force is set to be smaller than a restoring force by which the pressure in the fluid pressure actuator 20 returns to the atmospheric pressure and the fluid pressure actuator returns to a linear state from a curved state.

The other end side of the wire member 16 is fixed by a fixture 31C at a position (on the curved inner wall 22A side) facing the restraint member 28 on an outer circumference of the sealing member 30B. One end side of the wire member 16 is attached to the wire winding portion 14. The wire member 16 is made of a long wire material that can be wound, and a string such as a metallic cord or a fiber can be used. The wire member 16 is inserted into the wire holding member 18 from the other end side of the wire member to a portion in front of the wire member having been wound by the wire winding portion 14.

The wire holding member 18 has a tube shape (tubular shape) and is disposed at a position (on the curved inner wall 22A side) facing the restraint member 28 on the outer circumference of the sealing member 30B. The wire holding member 18 has a length (longer than the actuator main body portion 22) that covers from one end to the other end of the actuator main body portion 22 in an uncompressed state. The wire holding member 18 is disposed parallel to the axial direction S. As the wire holding member 18, a flexible tube can be used. The sealing member 30A has a lock portion 31A formed at a position corresponding to the curved inner wall 22A side in a circumferential direction. The lock portion 31A has a hole 31B open in the axial direction S into which the wire holding member 18 can be inserted, and the wire member 16 is inserted into the hole 31B. The lock portion 31 restricts the wire holding member 18 from being moved in the circumferential direction and a radial direction with respect to the sealing member 30A. The relative movement of the wire holding member 18 and the sealing member 30A with respect to each other is allowed in the axial direction S. Consequently, the wire holding member 18 is provided over the actuator main body portion from one end to the other end, is disposed along the curved inner wall 22A of the actuator main body portion 22, and conforms to the movement of the actuator main body portion 22.

The measurement unit 15 is configured of a rotary encoder that detects a signal depending on the rotation of the wire winding portion 14 around the winding axis M, and transmits a detection signal to a counter board 44, which will be described below, of the controller 40. The counter board 44 counts signals transmitted from the measurement unit 15 and obtains a winding length LR of the wire member 16.

Here, operations of the fluid pressure actuator 20 and the length L1 of the curved inner wall 22A are described. The length L1 of the curved inner wall 22A is a length L0 when the fluid pressure actuator 20 is in a non-curved state, and the length is shortened as the pressure in the fluid pressure actuator 20 increases. The wire member 16 disposed along the curved inner wall 22A is wound by the wire winding portion 14 so as not to be loosened by the shortening. The other end side of the wire member 16 is fixed to the curved inner wall 22A side of a distal end (the sealing member 30B) of the fluid pressure actuator 20, and the one end side thereof is attached to the wire winding portion 14. Hence, an extension length of the wire member 16 from the wire winding portion 14 can be measured depending on the winding rotation of the wire member 16 by the wire winding portion 14.

Since the wire member 16 is inserted through the wire holding member 18 and is disposed along the curved inner wall 22A of the actuator main body portion 22, the winding length LR which is a change amount of the wire member 16 and a shortened length of the actuator main body portion 22 are substantially the same. The length L1 of the curved inner wall 22Ais a length obtained by subtracting the winding length LR of the wire member 16 from the length L0 when the actuator main body portion 22 is in the non-curved state. The length L1 of the curved inner wall 22A can be calculated by subtracting the length LR from the length L0.

The controller 40 includes a CPU, a ROM, a RAM, a storage unit, and the like (not illustrated), and has a computer function. The controller 40 also includes the counter board 44, an AD board 42, and a DA board 46.

The counter board 44 is connected to the measurement unit 15, and signals are input from the measurement unit 15. The counter board 44 counts the input signals, obtains the winding length LR of the wire member 16, and sends the information of the length LR to the storage unit.

The AD board 42 is connected to the pressure sensor 52 and receives a pressure signal detected by the pressure sensor 52. The AD board 42 performs digital conversion of the input pressure signal into pressure data and sends the pressure data to the storage unit. The pressure data is used to calculate the gripping force F to be described below. The pressure data may be fed back to the servo-valve 54 via the DA board 46 to adjust an opening degree of the servo-valve 54.

The storage unit of the controller 40 stores various items of data such as the length L0, a gripping force estimation model to be described below, the input length LR, and the pressure data.

### <Gripping Force Estimation Model>

The gripping force estimation model is a model for estimating the gripping force F of the fluid pressure actuator 20. When the length of the curved inner wall 22A which is the length from one end portion to the other end portion of the most contracted side surface of the main body portion of the actuator main body portion 22 is represented by L1 (m), the internal pressure of the actuator main body portion 22 is represented by P (Pa), the gripping force is represented by F (N), parameters set based on basic characteristics of the fluid pressure actuator 20 are represented by ω₁ (m) and ω₂ (N), and a constant based on geometric characteristics of the fluid pressure actuator 20 related to the length L0 (m) is represented by Lₘᵢₙ (m), the gripping force F (N) is obtained by the following equation (1).$F = {ω}_{1} P \left(L1-{L}_{min}\right) + {ω}_{2}$ (1)

The parameters ω₁ and ω₂ are determined from measurement values obtained by measuring the basic characteristics of the fluid pressure actuator 20. For example, pressure control of the fluid pressure actuator 20 is performed, and the length L1 and the gripping force F are measured at a plurality of different pressures. The gripping force F can be measured by a gripping force sensor 60 illustrated in Fig. 4. The gripping force sensor 60 includes a force receiving portion 62 and a movable leg portion 64 and measures the actual gripping force F by pressing the force receiving portion 62 with the distal end of the fluid pressure actuator 20. Then, ω₁ and ω₂ are determined by the least square method with P(L - Lₘᵢₙ) as an explanatory variable.

The controller 40 obtains the length L1 by subtracting the input length LR from the length L0 stored in advance, the length L1 and the input pressure data P are applied to Equation (1), and the gripping force F is calculated. The calculated gripping force F is output in response to a request. The output may be a display on a display unit or an output for feedback for the next processing.

In the actuator gripping force estimation apparatus 10 according to the present embodiment, the wire holding member 18 causes the wire member 16 to be disposed and conform to the curved deformation of the curved inner wall 22A of the actuator main body portion 22 of the fluid pressure actuator 20. Hence, the length of the fluid pressure actuator 20 on the curved inner side can be easily measured even in the curved state by measuring the length LR that is the change amount of the wire member 16.

The gripping force F can be easily estimated by Equation (1) including only two variables of the length L1 and the pressure data P.

In the present embodiment, the length L1 is obtained by the change amount of the wire member 16, but the length L1 may be obtained by another method. For example, it is also possible to use a sensor capable of measuring a curvature length.

### <Evaluation Experiment of Gripping Force Estimation Model>

Test data was measured for the gripping force estimation model, and an evaluation thereof was performed. Compressed air was supplied to the fluid pressure actuator 20 in a sine wave having an amplitude of 200 kPa and an average of 200 kPa as an internal pressure target, and the pressure data P, the length L1, and an actual gripping force FR were measured. The pressure data P and the length L1 of the test data obtained in this evaluation experiment were input to the gripping force estimation model to compute the gripping force F, and the gripping force F was compared with the gripping force FR obtained actually by the measurement. In this evaluation experiment, the distal end of the fluid pressure actuator 20 was brought into contact with the force receiving portion 62 at the time of the internal pressure of 200 kPa, and the measurement was performed in two situations where the length L1 was 0.074 m and 0.072 m.

A relationship between the length L1 and a bending angle of the fluid pressure actuator 20 is L1 = -3.2 × 10-4θ + 0.085 · · · (6), and a bending angle θ corresponding to L = 0.074 m is about 34 deg, and the bending angle θ corresponding to L = 0.072 m is about 40 deg.

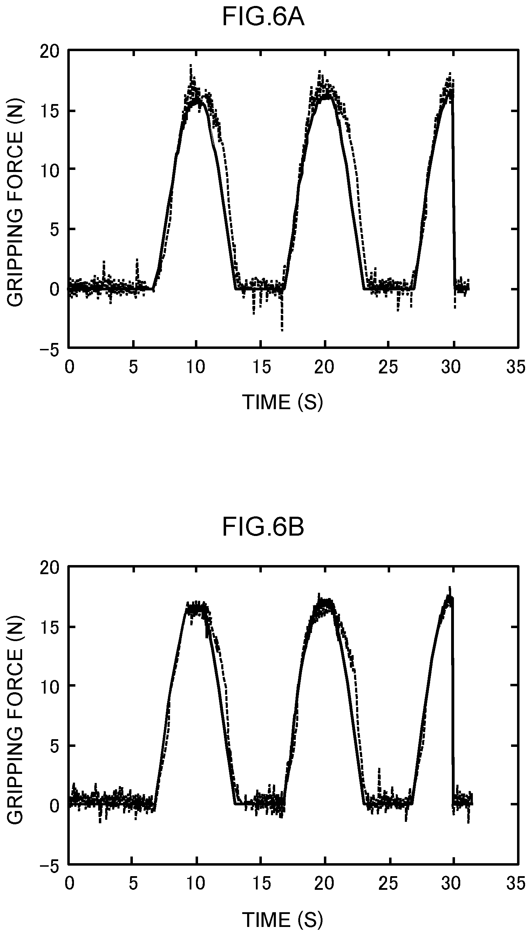

Fig. 6 illustrates results of an estimated gripping force FG and the measured gripping force F. In the graph, a dotted line represents the measured value (the gripping force FR), and a solid line represents the gripping force F obtained from the equation of the gripping force estimation model. It is assumed that an external force received by the distal end of the fluid pressure actuator 20 always acts in a reaction force direction, and in this experiment, in a case where the estimated gripping force F becomes 0 N (0 Newton) or less, threshold processing for setting the gripping force F to 0 N (0 Newton) was performed. The estimated gripping force FG has an error of about 1 N at the maximum with respect to the peak of the measured gripping force FR of about 15 N, and the estimation accuracy near the peak is particularly improved.

## Claims

1. An actuator gripping force estimation apparatus that estimates, as a gripping force of a fluid pressure actuator, a force acting in a direction orthogonal to a tube axis of the fluid pressure actuator when the tube axis is not curved due to curvature, in which the fluid pressure actuator includes a tubular main body portion having a tube wall of which one side is shortened in a tube axis direction and curved due to an increase in internal pressure in a tube, a proximal end side along the tube axis which is fixed to a base body, and a distal end which moves relative to the base body, the actuator gripping force estimation apparatus comprising:
a pressure sensor that acquires a tube internal pressure of the main body portion;
the actuator gripping force estimation apparatus being **characterised in that** it further comprises:
a length acquisition unit that acquires a length from one end portion to another end portion of a side surface of the main body portion which has a largest shortened amount; and
a gripping force estimation unit that estimates the gripping force using Equation F = ω₁P(L-Lₘᵢₙ) + ω₂, wherein L represents the length obtained by the length acquisition unit, P represents the internal pressure in the tube obtained by the pressure sensor, F represents the gripping force, ω₁ and ω₂ represent parameters set based on basic characteristics of the fluid pressure actuator, and Lₘᵢₙ represents a constant based on geometric properties of the fluid pressure actuator.

2. The actuator gripping force estimation apparatus according to claim 1, wherein the length acquisition unit includes a wire member having one end side attached to the base body and a middle portion which is disposed at a curved side of the main body portion and conforms to curved deformation, a wire holding member that holds the wire member at a position along the main body portion, and a measurement unit that applies tension to the wire member and measures a length change amount of the wire member.

3. A method for estimating an actuator gripping force for estimating, as a gripping force of a fluid pressure actuator, a force acting in a direction orthogonal to a tube axis of the fluid pressure actuator when the tube axis is not curved due to curvature, in which the fluid pressure actuator includes a tubular main body portion having a tube circumference of which one side is shortened in a tube axis direction and curved due to an increase in internal pressure in a tube, a proximal end side along the tube axis which is fixed to a base body, and a distal end which moves relative to the base body, the method being **characterised in that** it further comprises:
estimating the gripping force with a gripping force estimation unit using Equation F = ω₁P(L-Lₘᵢₙ) + ω₂, wherein L represents a length from one end portion to another end portion of a most contracted side surface of the main body portion, P represents the internal pressure in the tube, F represents the gripping force, ω₁ and ω₂ represent parameters set based on basic characteristics of the fluid pressure actuator, and Lₘᵢₙ represents a constant based on geometric characteristics of the fluid pressure actuator.

4. The method for estimating an actuator gripping force according to claim 3, wherein the length from one end portion to the other end portion of the most contracted side surface of the main body portion is obtained by:
holding a wire member at a position along the main body portion, the wire member having one end side attached to the base body and a middle portion disposed along a curved side of the main body portion and the tube axis direction,
applying tension to the wire member and measuring a length change amount of the wire member.

## Patentansprüche

1. Einrichtung zur Schätzung der Greifkraft einer Betätigungsvorrichtung, die als Greifkraft einer Fluiddruck-Betätigungsvorrichtung eine Kraft schätzt, die in einer Richtung orthogonal zu einer Rohrachse der Fluiddruck-Betätigungsvorrichtung wirkt, wenn die Rohrachse nicht aufgrund einer Krümmung gekrümmt ist, wobei die Fluiddruck-Betätigungsvorrichtung einen rohrförmigen Hauptkörperabschnitt einschließt, der eine Rohrwand, deren eine Seite in Richtung der Rohrachse verkürzt und aufgrund eines Anstiegs des Innendrucks in einem Rohr gekrümmt ist, eine proximale Endseite entlang der Rohrachse, die an einem Grundkörper befestigt ist, und ein distalea Ende aufweist, das sich relativ zum Grundkörper bewegt, wobei die Einrichtung zur Schätzung der Greifkraft der Betätigungsvorrichtung umfasst:
einen Drucksensor, der einen Rohrinnendruck des Hauptkörperabschnitts erfasst;
wobei die Einrichtung zur Schätzung der Greifkraft der Betätigungsvorrichtung **dadurch gekennzeichnet ist, dass** sie weiter umfasst:
eine Längenerfassungseinheit, die eine Länge von einem Endabschnitt zum anderen Endabschnitt einer Seitenfläche des Hauptkörperabschnitts erfasst, die den größten Verkürzungsbetrag aufweist; und
eine Greifkraftschätzeinheit, die die Greifkraft mithilfe der Gleichung F = ω₁P(L-Lₘᵢₙ) + ω₂ schätzt, wobei L die durch die Längenerfassungseinheit erhaltene Länge darstellt, P den mit dem Drucksensor erhaltenen Innendruck in dem Rohr darstellt, F die Greifkraft darstellt, ω₁ und ω₂ Parameter darstellen, die auf Basis von Grundeigenschaften der Fluiddruck-Betätigungsvorrichtung festgelegt werden, und Lₘᵢₙ eine Konstante darstellt, die auf geometrischen Eigenschaften der Fluiddruck-Betätigungsvorrichtung basiert.

2. Einrichtung zur Schätzung der Greifkraft der Betätigungsvorrichtung nach Anspruch 1, wobei die Längenerfassungseinheit ein Drahtelement, das eine Endseite, die am Grundkörper befestigt ist, und einen Mittelabschnitt aufweist, der an einer gekrümmten Seite des Hauptkörperabschnitts angeordnet ist und sich der gekrümmten Verformung anpasst, ein Drahthalteelement, das das Drahtelement an einer Position entlang des Hauptkörperabschnitts hält, und eine Messeinheit einschließt, die eine Spannung auf das Drahtelement ausübt und eine Längenänderung des Drahtelements misst.

3. Verfahren zur Schätzung der Greifkraft einer Betätigungsvorrichtung, um als Greifkraft einer Fluiddruck-Betätigungsvorrichtung eine Kraft zu schätzen, die in einer Richtung orthogonal zu einer Rohrachse einer Fluiddruck-Betätigungsvorrichtung wirkt, wenn die Rohrachse nicht aufgrund einer Krümmung gekrümmt ist, wobei die Fluiddruck-Betätigungsvorrichtung einen rohrförmigen Hauptkörperabschnitt einschließt, der einen Rohrumfang, dessen eine Seite in Richtung der Rohrachse verkürzt und aufgrund eines Anstiegs des Innendrucks in einem Rohr gekrümmt ist, eine proximale Endseite entlang der Rohrachse, das an einem Grundkörper befestigt ist, und ein distales Ende aufweist, das sich relativ zum Grundkörper bewegt, wobei das Verfahren **dadurch gekennzeichnet ist, dass** es weiter umfasst:
Schätzen der Greifkraft mit einer Greifkraftschätzeinheit
mithilfe der Gleichung F = ω₁P(L-Lₘᵢₙ) + ω₂, wobei L eine Länge von einem Endabschnitt zum anderen Endabschnitt der am stärksten zusammengezogenen Seitenfläche des Hauptkörperabschnitts darstellt, P den Innendruck in dem Rohr darstellt, F die Greifkraft darstellt, ω₁ und ω₂ Parameter darstellen, die auf Basis von Grundeigenschaften der Fluiddruck-Betätigungsvorrichtung festgelegt werden, und Lₘᵢₙ eine Konstante darstellt, die auf geometrischen Eigenschaften der Fluiddruck-Betätigungsvorrichtungs basiert.

4. Verfahren zur Schätzung der Greifkraft einer Betätigungsvorrichtung nach Anspruch 3, wobei die Länge von einem Endabschnitt zum anderen Endabschnitt der am stärksten zusammengezogenen Seitenfläche des Hauptkörperabschnitts erhalten wird durch:
Halten eines Drahtelements an einer Position entlang des Hauptkörperabschnitts, wobei das Drahtelement eine Endseite, die am Grundkörper befestigt ist, und einen Mittelabschnitt aufweist, der entlang einer gekrümmten Seite des Hauptkörperabschnitts und in der Rohrachsenrichtung angeordnet ist,
Ausüben von Spannung auf das Drahtelement und Messen einer Längenänderung des Drahtelements.

## Revendications

1. Appareil d'estimation de force de préhension d'actionneur qui estime, en tant que force de préhension d'un actionneur de pression de fluide, une force agissant dans une direction orthogonale à un axe de tube de l'actionneur de pression de fluide lorsque l'axe de tube n'est pas incurvé en raison d'une courbure, dans lequel l'actionneur de pression de fluide inclut une partie de corps principal tubulaire présentant une paroi de tube dont un côté est raccourci dans une direction d'axe de tube et incurvé en raison d'une augmentation de la pression interne dans un tube, un côté d'extrémité proximale le long de l'axe de tube qui est fixé à un corps de base et une extrémité distale qui se déplace par rapport au corps de base, l'appareil d'estimation de force de préhension d'actionneur comprenant :
un capteur de pression qui acquiert une pression interne de tube de la partie de corps principal ;
l'appareil d'estimation de force de préhension d'actionneur étant **caractérisé en ce qu'**il comprend en outre :
une unité d'acquisition de longueur qui acquiert une longueur d'une partie d'extrémité à une autre partie d'extrémité d'une surface latérale de la partie de corps principal qui présente le plus grand raccourcissement ; et
une unité d'estimation de force de préhension qui estime la force de préhension en utilisant l'équation F = ω₁P(L-Lₘᵢₙ) + ω₂, dans laquelle L représente la longueur obtenue par l'unité d'acquisition de longueur, P représente la pression interne dans le tube obtenue par le capteur de pression, F représente la force de préhension, ω₁ et ω₂ représentent des paramètres définis sur la base de caractéristiques de base de l'actionneur de pression de fluide, et Lₘᵢₙ représente une constante basée sur des propriétés géométriques de l'actionneur de pression de fluide.

2. Appareil d'estimation de force de préhension d'actionneur selon la revendication 1, dans lequel l'unité d'acquisition de longueur inclut un élément fil présentant un côté d'extrémité fixé au corps de base et une partie centrale qui est disposée au niveau d'un côté incurvé de la partie de corps principal et qui se conforme à la déformation incurvée, un élément de maintien de fil qui maintient l'élément fil dans une position le long de la partie de corps principal et une unité de mesure qui applique une tension à l'élément fil et mesure un changement de longueur de l'élément fil.

3. Procédé d'estimation d'une force de préhension d'actionneur pour estimer, en tant que force de préhension d'un actionneur de pression de fluide, une force agissant dans une direction orthogonale à un axe de tube de l'actionneur de pression de fluide lorsque l'axe de tube n'est pas incurvé en raison d'une courbure, dans lequel l'actionneur de pression de fluide inclut une partie de corps principal tubulaire présentant une circonférence de tube dont un côté est raccourci dans une direction d'axe de tube et incurvé en raison d'une augmentation de la pression interne dans un tube, un côté d'extrémité proximale le long de l'axe de tube qui est fixé à un corps de base et une extrémité distale qui se déplace par rapport au corps de base, le procédé étant **caractérisé en ce qu'**il comprend en outre :
l'estimation de la force de préhension avec une unité d'estimation de force de préhension
en utilisant l'équation F = ω₁P(L-Lₘᵢₙ) + ω₂, dans laquelle L représente une longueur allant d'une partie d'extrémité à une autre partie d'extrémité d'une surface latérale la plus contractée de la partie de corps principal, P représente la pression interne dans le tube, F représente la force de préhension, ω1 et ω2 représentent des paramètres définis sur la base de caractéristiques de base de l'actionneur de pression de fluide, et Lₘᵢₙ représente une constante basée sur des caractéristiques géométriques de l'actionneur de pression de fluide.

4. Procédé d'estimation d'une force de préhension d'actionneur selon la revendication 3, dans lequel la longueur allant d'une partie d'extrémité à l'autre partie d'extrémité de la surface latérale la plus contractée de la partie de corps principal est obtenue par :
le maintien d'un élément fil au niveau d'une position le long de la partie de corps principal, l'élément fil présentant un côté d'extrémité fixé au corps de base et une partie centrale disposée le long d'un côté incurvé de la partie de corps principal et de la direction d'axe de tube,
l'application d'une tension à l'élément fil et la mesure d'un changement de longueur de l'élément fil.
